# EUROPÄISCHE PATENTSCHRIFT

(11) **EP 0 588 840 B1**
(45) Veröffentlichungstag und Bekanntmachung des Hinweises auf die Patenterteilung: **28.12.1994**
(21) Anmeldenummer: 92911148.2
(22) Anmeldetag: 09.06.1992
(51) Int. Cl.: B01D 61/36, F04C 19/00, F04F 5/54

(54) **VORRICHTUNG ZUM KONTINUIERLICHEN REINIGEN DER HILFS- BZW. BETRIEBSFLÜSSIGKEIT EINES VERDICHTERS**
APPARATUS FOR CONTINUOUSLY CLEANING THE AUXILIARY OR WORKING LIQUID OF A COMPRESSOR
DISPOSITIF DE NETTOYAGE EN CONTINU DU LIQUIDE AUXILIAIRE OU DE SERVICE D'UN COMPRESSEUR

(30) Priorität: 07.06.1991 DE 4118787
(43) Veröffentlichungstag der Anmeldung: 30.03.1994
(73) Patentinhaber: SIHI GmbH & Co KG, D-25524 Itzehoe (DE); GKSS-FORSCHUNGSZENTRUM GEESTHACHT GMBH, D-21502 Geesthacht (DE)
(72) Erfinder: NIKUTTA, Karl-Heinz, D-2210 Itzehoe (DE); GOSCH, Dietmar, D-2210 Itzehoe (DE); ZIMMERMANN, Erwin, D-2211 Heiligenstedten (DE); OHLROGGE, Klaus, D-2054 Geesthacht (DE); WIND, Jan, D-2058 Lauenburg (DE); PEINEMANN, Klaus-Viktor, D-2054 Geesthacht (DE)
(74) Vertreter: Glawe, Delfs, Moll & Partner
(86) Internationale Anmeldenummer: EP9201292
(87) Internationale Veröffentlichungsnummer: WO9221432

(56) Entgegenhaltungen:
- EP-A- 0 007 528
- EP-A- 0 216 181
- WO-A-91/08825
- DE-A- 2 511 334

## Beschreibung

Die Erfindung betrifft eine Verdichteranlage mit einer Einrichtung zur kontinuierlichen Reinigung der Hilfs- bzw. Betriebsflüssigkeit.

Viele Prozesse werden mit Hilfe von Verdichtern durchgeführt, wobei diese Verdichter häufig solche sind, die mit einer Flüssigkeit als Hilfs- bzw. Betriebsflüssigkeit arbeiten. Beim Absaugen oder Verdichten der verschiedenen Gase kommt es häufig vor, daß sich Teile dieser Gase, z.B. infolge von Kondensation in die Hilfs- bzw. Betriebsflüssigkeit des Verdichters als unerwünschte Nebenstoffe einlagern. Sie können einmal umweltschädigend sein, d.h. man kann sie nicht einfach mit der Betriebsflüssigkeit der Pumpe abführen. Sie können auch physikalische und chemische Eigenschaften haben, die die Hilfs- bzw. Betriebsflüssigkeit (Dampfdruck/Korrosion) so ungünstig beeinflussen, daß bei Rückführung und Wiederverwendung dieser Flüssigkeit im Verdichter eine sichere Betriebsweise nicht gewährleistet werden kann. Das kann sich z.B. so auswirken, daß die in die Betriebsflüssigkeit eingelagerten kondensierten Anteile bei Wiederzuführung der Hilfs- bzw. Betriebsflüssigkeit in den Verdichter hier ausgasen und dadurch eine erhebliche Minderleistung des Verdichters bewirken. Es ist bekannt (EP-A-0 007 528), solche Flüssigkeiten durch Zerstäubung und Erhitzung bei niedrigem Druck sowie Kondensation zu reinigen. Dieser Aufwand ist erheblich und für große Verdichterprozesse sicherlich auch wirtschaftlich zu vertreten. Für kleinere Anlagen ist der Aufwand jedoch unverhältnismäßig hoch. Aufgabe der Erfindung ist es, hier eine effiziente aber kostengünstigere Möglichkeit für die Reinigung der Flüssigkeit zu schaffen.

Die erfindungsgemäße Lösung besteht darin, daß nach Ausscheidung/Abtrennung vom Gasstrom in einem Abscheider die Hilfs- bzw. Betriebsflüssigkeit mittels des Verdichters durch ein Pervaporationsmembranmodul gedrückt wird, die Retentatseite des Membranmodules mit dem Hilfs- bzw. Betriebsflüssigkeitseintritt und die Permeatseite des Membranmodules mit der Saugseite desselben Verdichters unter Zwischenschaltung eines Kondensators verbunden ist.

Man benutzt hier die Druckdifferenz des Verdichters der Verdichteranlage, um die Hilfs- bzw. Betriebsflüssigkeit durch das Membranmodul zu drücken und von der Retentatseite aus die gereinigte Flüssigkeit direkt dem Betriebsflüssigkeitsanschluß des Verdichters zuzuführen. Außerdem wird das Druckgefälle bei dieser Anordnung dazu benutzt, das aus dem Membranmodul austretende Permeat über einen Kondensator der Saugseite desselben Verdichters wieder zuzurühren. Das das Membranmodul verlassende Permeat ist dabei mit den unerwünschten Nebenstoffen angereichert, und im nachgeschalteten Kondensator wird mit entsprechend gutem Wirkungsgrad der weitaus überwiegende Teil dieser Nebenstoffe kondensiert und kann gezielt abgeführt werden.

Bei der erfindungsgemäßen Anlage wird also ein kleiner Teil des Leistungsvermögens des Verdichters für den Betrieb des Pervaporationsmembranmodules eingesetzt. Dieser Teil kann - je nach Nebenstoffkonzentration und Art des Membranmodules - beispielsweise 5 - 20 % betragen.

Hilfs- bzw. Betriebsflüssigkeiten für solche Verdichter erwärmen sich bei dem Betrieb des Verdichters und es ist folglich notwendig, einen Wärmetauscher zum Herunterkühlen der Flüssigkeit einzuschalten. Erfindungsgemäß wird vorgeschlagen, diesen Wärmetauscher zwischen der Retentatseite des Membranmodules und dem Hilfs- bzw. Betriebsflüssigkeitseintritt des Verdichters anzuordnen. Das hat den Vorteil, daß die Flüssigkeit dem Membranmodul mit etwas erhöhter Temperatur zuströmt und die Wirkung des Modules hierdurch effizienter ist, d.h. die Selektivität erhöht wird.

Sollte die Nebenstoffbelastung in der Hilfs- bzw. Betriebsflüssigkeit sehr hoch sein, kann es zweckmäßig sein, zwischen dem Abscheider und dem Membranmodul eine Umwälzpumpe anzuordnen und einen Teil des Retentatstromes des Membranmodules über einen Bypass in den Abscheider zurückzuführen. Durch die Vermischung der gereinigten Flüssigkeit mit der höher mit Nebenstoffen belasteten Flüssigkeit erreicht man so im Abscheider schon eine Verminderung der Gesamtnebenstoffbelastung der Flüssigkeit, die dann dem Membranmodul zugeführt wird. Der Abscheideeffekt wird durch dieses teilweise Umwälzen also deutlich erhöht und die Nebenstoffkonzentration der der Pumpe zugeleiteten Betriebsflüssigkeit entsprechend vermindert.

Zur Erhöhung der Selektivität des Pervaporationsmembranmodules kann es ebenfalls zweckmäßig sein, zwischen dem Abscheider und dem Modul einen weiteren Wärmetauscher zum Erwärmen der Hilfs- bzw. Betriebsflüssigkeit vorzusehen. Hierin wird dann vor Eintritt in das Membranmodul die Flüssigkeit zunächst auf eine erhöhte Temperatur gebracht.

Anhand der beigefügten Zeichnungen sei die Erfindung beispielsweise erläutert. Darin zeigen:
- Fig. 1: eine erste Ausführungsform und
- Fig. 2: eine zweite Ausführungsform.

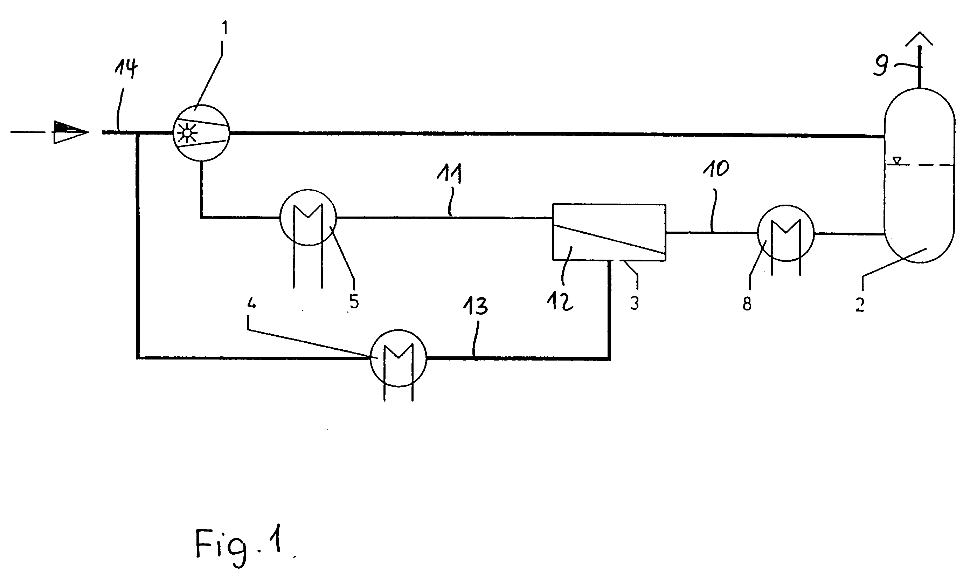

Fig. 1 zeigt Schema und Fließschema einer Anlage, die einen Prozeßverdichter 1 enthält, bei dem es sich beispielsweise um eine Flüssigkeitsringgaspumpe handelt. Das den Verdichter verlassende Gas-Flüssigkeitsgemisch strömt in den Abscheider 2, und hier erfolgt die Trennung von dem Gas und der mitgeführten Hilfs- bzw. Betriebsflüssigkeit der Pumpe. Die Flüssigkeit sammelt sich im untern Teil des Abscheiders 2 und ist mit unerwünschten Nebenstoffen belastet. Aus dem Abscheider 2 wird das Gas durch die Leitung 9 dem vorgesehenen Zweck zugeführt.

Die Hilfs- bzw. Betriebsflüssigkeit wird über eine Leitung 10 dem Pervaporationsmodul 3 zugeführt, dessen weitgehend gereinigtes Retentat durch die Leitung 11 als Betriebsflüssigkeit direkt in den Verdichter fließt. Die Leitung 11 kann einen Wärmetauscher enthalten, der dem Herunterkühlen der Hilfs- bzw. Betriebsflüssigkeit aus verfahrenstechnischen oder betrieblichen Gründen dient, wie z.B. um den Dampfdruck zu senken.

In der Leitung 10 zwischen dem Abscheider 2 und dem Membranmodul 3 kann weiterhin ein Wärmetauscher 8 vorgesehen sein, den die Flüssigkeit vor Eintritt in das Membranmodul durchströmt. Darin wird die Flüssigkeit aufgeheizt, um die Wirkung des Pervaporationsmembranmodules zu verbessern.

Von der Permeatseite 12 des Modules gelangt das dampfförmige Permeat, das stark mit den unerwünschten Nebenstoffen belastet ist, durch die Leitung 13 in den Kondensator 4, in dem die unerwünschten Nebenstoffe niedergeschlagen werden und dann aus dem Kondensator konzentriert entnommen werden können. Das gereinigte Permeat strömt dann weiter in die Saugleitung 14 des Verdichters 1 und gelangt so wieder in den Kreislauf hinein.

Um die Flüssigkeit durch das Membranmodul und die Leitungen 10 und 11 und den Permeatstrom durch die Membran durch die Leitung 12 und den Kondensator zu drücken, wird die Druckdifferenz des Verdichters benutzt, der auch als Prozeßverdichter dient. Ggf. muß der Verdichter in seiner Leistung etwas höher ausgelegt werden, als dies lediglich für den Prozeß erforderlich wäre, aber man spart eine eigene Verdichteranlage für den Reinigungsprozeß ein.

Wenn der Prozeß dies verlangt, kann anstelle des im Beispiel gezeigten einen Prozeßverdichters 1 auch mehrere in Parallel- oder Reihenschaltung eIngesetzt sein, ebenso wie ein oder mehrere Pervaporationsmodule in Reihe oder parallelgeschaltet sein können.

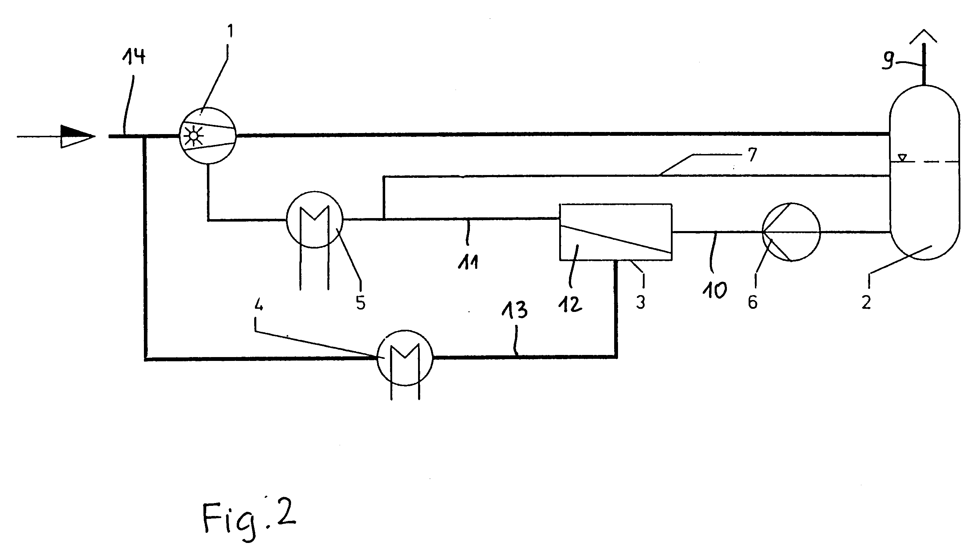

Fig. 2 zeigt das Schema einer Anlage, bei der entsprechende Anlagenteile mit gleichen Bezugsziffern versehen sind wie in Fig. 1. Diese zweite Ausführungsform unterscheidet sich von der ersten dadurch, daß zusätzlich noch eine Flüssigkeitspumpe 6 in Leitung 10 sowie ein Bypass 7, der einen Teil des Retentates aus der Betriebsflüssigkeitsleitung zum Verdichter hin abzweigt und in den Abscheidebehälter zurückführt, vorgesehen sind. Dadurch wird nur ein Teil des Retentats, das den Membranmodul 3 durchströmt hat, in den Verdichter zurückgeführt, währen ein anderer Teil der Reinigung mehrfach unterworfen wird.

Dies kann erforderlich sein, wenn bei einmaligem Durchströmen des Modules nicht genügen Nebenstoffe aus der Hilfs- bzw. Betriebsflüssigkeit der Pumpe herausgeführt werden können. Dadurch, daß man bereits von Nebenstoffen weitgehend befreites Retentat mit dem höherbelasteten im Behälter 2 mischt und damit die Konzentration hier herabsetzt, wird schon im Abscheider eine Senkung der Nebenstoffbelastung erreicht. Statt das Retentat über die Leitung 7 zum Abscheider zurückzuführen, kann man es auch einem oder mehreren weiteren, besonderen Membranmodul(en) zuführen.

## Patentansprüche

1. Verdichteranlage mit einer Einrichtung zum kontinuierlichen Reinigen der Hilfs- bzw. Betriebsflüssigkeit, dadurch gekennzeichnet, daß die Hilfs- bzw. Betriebsflüssigkeit von der Druckseite des Verdichters und nach einem dem Verdichter (1) nachgeschalteten Abscheider (2) einem Pervaporationsmembranmodul (3) zuführbar ist, dessen Retentatseite mit dem Hilfs- bzw. Betriebsflüssigkeitseintritt desselben Verdichters (1) und dessen Permeatseite unter Zwischenschaltung eines Kondensators (4) mit der Saugseite desselben Verdichters (1) verbunden ist.

2. Verdichteranlage nach Anspruch 1, dadurch gekennzeichnet, daß zwischen der Retentatseite des Membranmodules (3) und dem Hilfs- bzw. Betriebsflüssigkeitseintritt des Verdichters (1) ein Wärmetauscher (5) zum Kühlen des Retentats angeordnet ist.

3. Verdichteranlage nach Anspruch 2 oder 3, dadurch gekennzeichnet, daß zwischen dem Abscheider (2) und dem Membranmodul (3) eine Pumpe (6) angeordnet ist und daß ein Teil des Retentatstromes des Membranmodules (3) über einem Bypass in den Abscheider zurückführbar ist.

4. Verdichteranlage nach einem der Ansprüche 2 bis 4, dadurch gekennzeichnet, daß zwischen dem Abscheider (2) und dem Membranmodul (3) ein Wärmetauscher (8) zum Erwärmen der Hilfs- bzw. Betriebsflüssigkeit vorgesehen ist.

## Claims

1. A compressor installation with a device for the continuous cleaning of the auxiliary or operating fluid, characterised in that the auxiliary or operating fluid can be supplied from the delivery side of the compressor and after a separator (2) connected downstream of the compressor (1) to a pervaporation membrane module (3), the retentate side of which is connected with the auxiliary or operating fluid inlet of said compressor (1) and the permeate side of which is connected via a condenser (4) with the intake side of said compressor (1).

2. A compressor installation according to Claim 1, characterised in that a heat exchanger (5) for cooling the retentate is disposed between the retentate side of the membrane module (3) and the auxiliary or operating fluid inlet of the compressor (1).

3. A compressor installation according to Claim 2 or 3, characterised in that a pump (6) is disposed between the separator (2) and the membrane module (3), and in that part of the retentate flow of the membrane module (3) can be fed back into the separator via a bypass.

4. A compressor installation according to any one of Claims 2 to 4, characterised in that a heat exchanger (8) for heating the auxiliary or operating fluid is provided between the separator (2) and the membrane module (3).

## Revendications

1. Installation de compression comportant un dispositif pour la purification en continu du liquide auxiliaire ou de service, caractérisée en ce qu'à partir du côté de refoulement du compresseur et après un séparateur (2) disposé à la suite du compresseur (1), le liquide auxiliaire ou de service peut être envoyé dans un module à membrane de pervaporisation (3), dont le côté rétentat est relié à l'entrée du liquide auxiliaire ou de service dans le compresseur (1) lui-même et dont le côté perméat est relié, avec interposition d'un condenseur (4), au côté aspiration du compresseur (1) lui-même.

2. Installation de compression selon la revendication 1, caractérisée en ce qu'un échangeur de chaleur (5) pour le refroidissement du rétentat est dispose entre le côté rétentat du module à membrane (3) et l'entrée du liquide auxiliaire au de service dans le compresseur (1).

3. Installation de compression selon la revendication 1 ou 2, caractérisée en ce qu'une pompe (6) est disposée entre le séparateur (2) et le module à membrane (3), et en ce qu'une partie du courant de rétentat du module à membrane (3) peut être recyclée dans le séparateur par une conduite de dérivation.

4. Installation de compression selon l'une quelconque des revendications 1 à 3, caractérisée en ce qu'un échangeur de chaleur (8) pour réchauffer le liquide auxiliaire ou de service est disposé entre le séparateur (2) et le module à membrane (3).
